# EUROPÄISCHE PATENTSCHRIFT

(11) **EP 2 712 684 B1**
(45) Veröffentlichungstag und Bekanntmachung des Hinweises auf die Patenterteilung: **29.06.2016**
(21) Anmeldenummer: 13179558.5
(22) Anmeldetag: 07.08.2013
(51) Int. Cl.: B07B 4/02, B07B 4/04, B07B 11/02, B29B 9/16, B07B 7/01, H05F 3/04

(54) **Verfahren zur Schwerkraftsichtung von Kunststoffpartikeln**
Method for gravity sifting plastic particles
Procédé de séparation à force de gravité de particules plastiques

(30) Priorität: 27.09.2012 DE 102012217577
(43) Veröffentlichungstag der Anmeldung: 02.04.2014
(73) Patentinhaber: Krones AG, 93073 Neutraubling (DE)
(72) Erfinder: Rossen, Frank, 93073 Neutraubling (DE)
(74) Vertreter: Grünecker Patent- und Rechtsanwälte PartG mbB

(56) Entgegenhaltungen:
- EP-A1- 0 616 856
- WO-A1-94/02288
- DE-A1- 10 054 418
- DE-A1-102004 059 808
- DE-A1-102005 013 701
- FR-A1- 2 945 969

## Beschreibung

Die Erfindung betrifft ein Verfahren zur Schwerkraftsichtung von Kunststoffpartikeln gemäß Oberbegriff des Anspruchs 1.

Die Schwerkraftsichtung von Kunststoffpartikeln ist ein weit verbreitetes Verfahren zum Auftrennen von Partikelkollektiven im Erdschwerefeld nach Größe oder Dichte der zugeführten Partikel. Insbesondere bei Kunststoffpartikeln kann die Trennung in die einzelnen Fraktionen durch elektrostatische Aufladung der Partikel behindert werden. Diese können insbesondere bei Recyclinggut schon bei der Zerkleinerung und/oder dem Transport der Kunststoffpartikel entstehen, ebenso bei anderen Trennprozessen. Beispielsweise kann im Vorfeld der Schwerkraftsichtung eine Materialtrennung mittels dosierter elektrostatischer Aufladung erfolgen, wie dies für die Trennung von PET-Partikeln und PVC-Partikeln bekannt ist. Jedoch können die zu sichtenden Kunststoffpartikel auch passiv, das heißt unbeabsichtigt, während des Materialtransports beispielsweise durch Reibung der Partikel an der Rohrwand in einem unerwünschten Ausmaß aufgeladen worden sein.

Die FR 29 45 969 A1 beschreibt eine Sichtungsanlage für Gummipartikel oder dergleichen, die beispielsweise aus zerkleinerten Reifen gewonnen werden. Die Partikel werden von oben in einen Sichtkanal eingefüllt und fallen gegen schräg an den Seitenwänden befestigte Prallbleche nach unten. Im Bereich der Prallbleche wird jeweils ionisierte Luft eingeblasen und zu einem schräg darüber auf der gegenüberliegenden Seitenwand befindlichen Auslass geleitet. Dadurch werden statisch aufgeladene Partikel, im Sinne von Verunreinigungen, von den Gummipartikeln abgelöst und entfernt.

Die EP 06 168 568 A1 beschreibt einen Zickzacksichter gemäß Oberbegriff des Anspruchs 1 mit einer Einströmöffnung für ein Sichtgas und einer zugehörigen Ausströmöffnung im oberen Bereich des Zickzackkanals, sowie mit seitlichen Einströmöffnungen 5 für ein ionisiertes Gas. Das zu sichtende Material besteht aus synthetischen Kunststoffpellets, von denen Fremdkörper mit vergleichsweise großer Anforderung an die Reinheit der Pellets zu entfernen sind.

Die DE 100 54 418 A1 beschreibt einen Windsichter, bei dem Sichtgas aus geneigten Fluidisierungsplatten quer zur Fließrichtung eines zu sichtenden Schüttguts geleitet wird. Dadurch werden staubförmige und faserige Beimengungen aus dem Schüttgut entfernt und abgesaugt.

Zur Reduzierung störender elektrostatischer Aufladungen ist es beispielsweise aus der US 7,380,670 bekannt, die Partikel Magnetfeldern auszusetzen. Magnetfelder lassen sich in den jeweiligen Vorrichtungen jedoch nicht oder nur mit großem technischen Aufwand in der geforderten Homogenität bereitstellen. Somit bilden sich in der Regel Anlagenbereiche aus, in denen die elektrostatischen Aufladungen der Kunststoffpartikel nicht ausreichend entfernt werden, so dass sich diese in den jeweiligen Bereichen in unerwünschter Weise ansammeln. Ungünstig ist bei derartigen Verfahren außerdem der hohe Energieverbrauch.

Es besteht daher der Bedarf für Verfahren und Vorrichtungen zur Windsichtung von Kunststoffpartikeln, insbesondere von nach dem Gebrauch zurück geführtem PET (R-PET), bei dem sich die störenden Einflüsse elektrostatischer Aufladungen effektiv und mit geringem energetischem Aufwand vermeiden oder zumindest reduzieren lassen.

Die gestellte Aufgabe wird mit einem Verfahren nach Anspruch 1 gelöst. Demnach lassen sich Kunststoff-Flakes mit Hilfe eines Sichtgases, das im Gegenstrom gegen die zu sichtenden Kunststoffpartikel aufwärts geführt wird, nach dem Prinzip der Schwerkraftsichtung auftrennen. Hierzu ist das Sichtgas zumindest teilweise ionisiert. Das Sichtgas ist vorzugsweise Luft. Bei der Ionisation werden vorzugsweise in der Luft vorhandene Sauerstoffmoleküle aufgeladen, so dass positiv und negativ geladene Sauerstoffionen entstehen. Diese können Ladungen insbesondere mit zu oxidierenden Reaktionspartnern, beispielsweise mit organischen und/oder anorganischen Substanzen, austauschen. Somit lassen sich elektrostatische Aufladungen der Partikel untereinander neutralisieren. Die Kunststoff-Flakes umfassen vorzugsweise Recyclinggut, insbesondere zerkleinerte PET-Flaschen. Deren unterschiedlich dicke und in der Regel unterschiedlich stark verstreckte Wandanteile lassen sich besonders vorteilhaft mittels der erfindungsgemäßen Schwerkraftsichtung trennen.

Erfindungsgemäß werden durch die Windsichtung Kunststoff-Flakes in eine Feinfraktion und eine Grobfraktion getrennt. Es lassen sich somit gleichartige Partikel, die sich nicht bezüglich ihres Grundmaterials, sondern lediglich hinsichtlich ihrer Form und/oder Größe unterscheiden, für eine anschließende Weiterverarbeitung gezielt auftrennen. Dies ist im Gegensatz zu Trennverfahren zu sehen, bei denen lediglich Verunreinigungen, wie beispielsweise anhaftender Staub oder Fasern, von einem bestimmten Material zu trennen sind. Dies schließt jedoch nicht aus, dass beispielsweise mit der Feinfraktion zusätzlich oberflächliche Verunreinigungen von dem Ausgangsmaterial abgetrennt werden, die sich anschließend in Feinstpartikelfilter oder dergleichen von der Feinfraktion abtrennen lassen. Besonders vorteilhaft ist die erfindungsgemäße Sichtung unterschiedlich großer und/oder dicker PET-Flakes aus zerkleinerten Kunststoffflaschen, da eine Auftrennung in unterschiedlich feine Fraktionen hier gleichzeitig eine Auftrennung in bei der Flaschenherstellung unterschiedlich stark verstreckte und damit unterschiedlich kristalline Materialanteile oder dergleichen ermöglicht.

Vorzugsweise wird dem Sichtgas ein ionisiertes Gas beigemengt, insbesondere bezüglich der Hauptströmungsrichtung des Sichtgases im Querstrom. Das ionisierte Gas lässt sich bei Bedarf auch an mehreren Stellen des Sichtgasstroms gezielt beimengen, so dass elektrostatische Aufladungen der Kunststoffpartikel effektiv und effizient reduziert werden können.

Im Querstrom lässt sich das ionisierte Gas gleichmäßig und/oder über den gesamten Strömungsquerschnitt des Sichtgases verteilen. Die Hauptströmungsrichtung des Sichtgases kann senkrecht nach oben weisen, so dass es als reine Gegenströmung bezüglich der Fallrichtung der Kunststoffpartikel wirkt, oder schräg nach oben weisen, so dass das Sichtgas nach herkömmlicher Definition in Kombination einer Gegenströmung und einer Querströmung wirkt. Erfindungsgemäß ist der Begriff "im Gegenstrom" für das Sichtgas derart definiert, dass dessen Gegenstromkomponente stets größer ist als dessen Querstromkomponente.

Vorzugsweise wird das ionisierte Gas in wenigstens zwei bezüglich ihres Volumenstroms und/oder ihrer Hauptströmungsrichtung getrennt einstellbaren Querströmen beigemengt. Dadurch lässt sich die elektrostatische Aufladung des Sichtgases in unterschiedlichen Bereichen des Sichtgasstroms gezielt reduzieren. Folglich lässt sich die Trennschärfe der Sichtung, insbesondere das Aufteilen der Kunststoffpartikel in eine Leichtfraktion und eine Schwerfraktion verbessern.

Vorzugsweise werden die Querströme dabei bezüglich der Hauptströmungsrichtung des Sichtgases hintereinander eingeleitet. Dadurch lässt sich die Trennschärfe der Sichtung weiter optimieren.

Vorzugsweise wird das Sichtgas in einer Zickzackströmung geführt. Darunter ist definitionsgemäß zu verstehen, dass sich die Hauptströmungsrichtung des Sichtgases mehrfach ändert, jedoch stets nach oben gerichtet ist. An den Richtungswechseln der Sichtgasströmung bilden sich einzelne Stufen der Schwerkraftsichtung aus, mit denen sich die Trennschärfe des Verfahrens weiter steigern lässt.

Vorzugsweise wird das ionisierte Gas dem Sichtgas dann an wenigstens zwei Stufen oder Richtungswechseln der Zickzackströmung beigemengt. Dadurch kann die Entladung der Kunststoffpartikel an die jeweiligen Stufen der Zickzackströmung gezielt angepasst und die Trennschärfe weiter verbessert werden.

Vorzugsweise sind die zu sichtenden Kunststoffpartikel eine Fraktion aus einem mittels aktiver elektrostatischer Partikelaufladung trennenden Materialtrennverfahren. Derartige Verfahren laden unterschiedliche Kunststoffmaterialien beispielsweise kontrolliert entgegengesetzt auf, so dass sich diese elektrostatisch trennen lassen. Bekannt ist dies beispielsweise für das Trennen von PET und PVC voneinander. Derart vorbehandelte Partikel können daher am Eingang der Windsichtung besonders stark elektrostatisch aufgeladen sein.

Jedoch können die zu sichtenden Kunststoffpartikel auch passiv, d.h. unbeabsichtigt während des Materialtransports vor der Windsichtung, beispielsweise durch Reibung der Partikel an der Rohrwand, Reibung der Partikel untereinander oder dergleichen, aufgeladen worden sein.

Vorzugsweise bestehen die Kunststoffpartikel zu wenigstens 50 Gew.% aus R-PET-Flakes. Eine Auftrennung von R-PET-Flakes ist für nachfolgende Bearbeitungsprozesse besonders vorteilhaft, da unterschiedliche Fraktionen, beispielsweise Leichtfraktionen und Schwerfraktionen, unterschiedliche Materialeigenschaften auf Grund der vorangegangenen Herstellungsprozesse haben können. Beispielsweise weisen Flakes aus dem Halsbereich und Bodenbereich geblasener Flaschen auf Grund fehlender oder geringer Verstreckung dieser Bereiche beim Streckblasen eine vergleichsweise geringe Kristallinität auf.

Beschrieben wird ebenso ein Schwerkraftsichter für Kunststoffpartikel. Demnach umfasst dieser einen Sichtkanal zur Führung eines eingeblasenen Sichtgases von unten nach oben und im Gegenstrom gegen die zu sichtenden Kunststoffpartikel. Ebenso ist eine lonisierungseinrichtung zum Ionisieren eines Anteils des Sichtgases vorgesehen. Der Anteil ist insbesondere ein mit der Ionisierungseinrichtung ionisiertes Gas, das nach der Ionisierung in das Sichtgas eingeleitet wird.

Vorzugsweise ist der Schwerkraftsichter als Zickzacksichter ausgebildet. Damit lässt sich die Trennschärfe der Sichtung gegenüber einem geradlinigen Steigrohrsichter verbessern.

Vorzugsweise sind separate Ionisierungseinrichtungen an wenigstens zwei Stufen des Zickzacksichters vorgesehen. Dadurch lässt sich die Entladung der Kunststoffpartikel besonders zielgerichtet und effizient steuern. Hierbei können an einer einzelnen Stufe des Vorzugsweise sind separate Ionisierungseinrichtungen an wenigstens zwei Stufen des Zickzacksichters vorgesehen. Dadurch lässt sich die Entladung der Kunststoffpartikel besonders zielgerichtet und effizient steuern. Hierbei können an einer einzelnen Stufe des Zickzacksichters mehrere Düsen zum Einleiten ionisierten Gases vorgesehen sein, die beispielsweise von einem gemeinsamen Ionenerzeuger versorgt werden.

Vorzugsweise ist eine Ionisierungseinrichtung im Bereich einer unteren Einblasleitung für das Sichtgas vorgesehen. Dadurch lässt sich die Beimengung des ionisierten Gases auf besonders einfache Weise realisieren. Eine derartige Ionisierungseinrichtung im Bereich der Einblasleitung könnte gezielt durch Ionisierungseinrichtungen an einzelnen Stufen des Zickzacksichters ergänzt werden.

Vorzugsweise sind Düsen mit verstellbarer Hauptströmungsrichtung zum Einleiten des ionisierten Gases vorgesehen. Damit lässt sich die Verteilung der Ionen zum Kompensieren der elektrostatischen Aufladung der Kunststoffpartikel gezielt an die jeweiligen Strömungsverhältnisse im Sichtkanal anpassen. Dies ist besonders im Bereich der einzelnen Stufen eines Zickzacksichters von Vorteil.

Zickzacksichters mehrere Düsen zum Einleiten ionisierten Gases vorgesehen sein, die beispielsweise von einem gemeinsamen Ionenerzeuger versorgt werden.

Vorzugsweise ist eine Ionisierungseinrichtung im Bereich einer unteren Einblasleitung für das Sichtgas vorgesehen. Dadurch lässt sich die Beimengung des ionisierten Gases auf besonders einfache Weise realisieren. Eine derartige Ionisierungseinrichtung im Bereich der Einblasleitung könnte gezielt durch Ionisierungseinrichtungen an einzelnen Stufen des Zickzacksichters ergänzt werden.

Vorzugsweise sind wenigstens zwei getrennt einstellbare Ionenerzeuger vorgesehen. Dadurch lässt sich die erforderliche Ionisierungsstärke genau und effizient an die zu sichtenden Kunststoffpartikel anpassen.

Vorzugsweise sind Düsen mit verstellbarer Hauptströmungsrichtung zum Einleiten des ionisierten Gases vorgesehen. Damit lässt sich die Verteilung der Ionen zum Kompensieren der elektrostatischen Aufladung der Kunststoffpartikel gezielt an die jeweiligen Strömungsverhältnisse im Sichtkanal anpassen. Dies ist besonders im Bereich der einzelnen Stufen eines Zickzacksichters von Vorteil.

Eine bevorzugte Ausführungsform der Erfindung ist in der Zeichnung dargestellt. Es zeigen:
- Figur 1: eine schematische Darstellung der Ströme des Sichtgases und eines ionisierten Gases;
- Figur 2: eine schematische seitliche Ansicht durch einen Schwerkraftsichter mit Zickzackströmung; und
- Figur 3: eine Schrägansicht des Schwerkraftsichters aus der Figur 2.

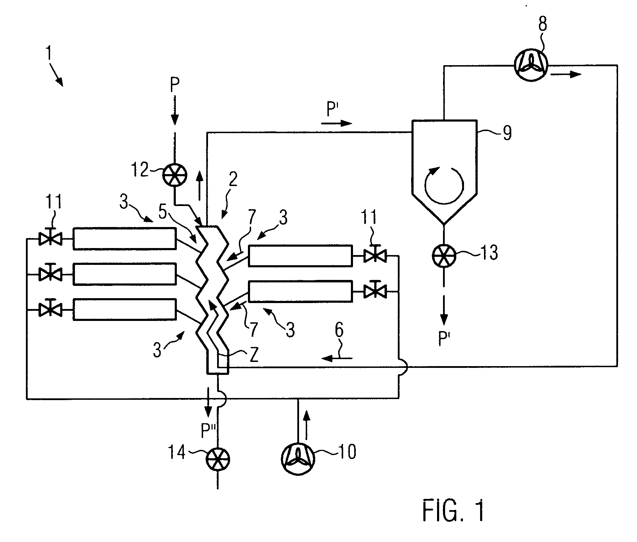

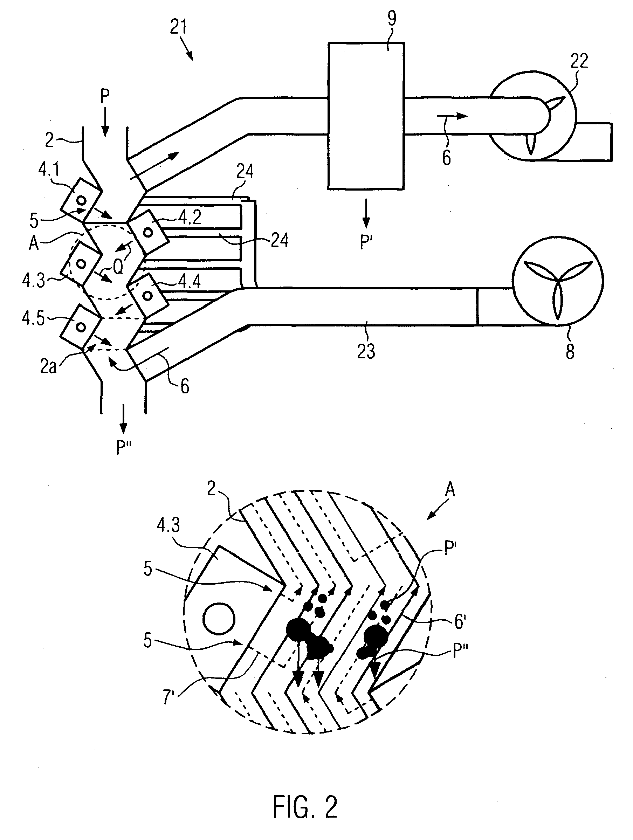

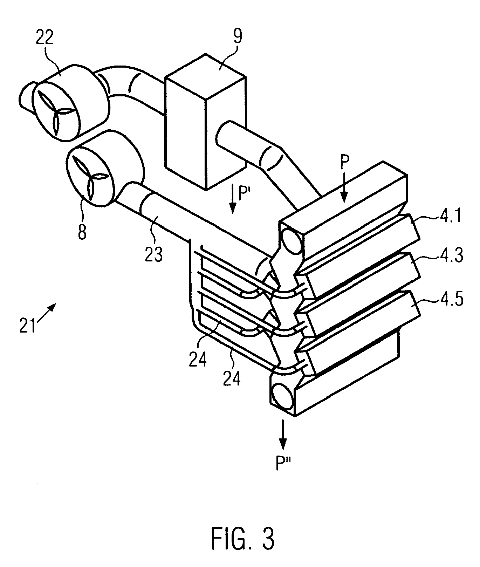

Wie die Figur 1 erkennen lässt, umfasst eine erste Ausführungsform 1 des Schwerkraftsichters für Kunststoffpartikel P einen Sichtkanal 2, an den Ionisierungseinrichtungen 3 angeschlossen sind. Diese umfassen beispielsweise in Fig. 2 und 3 dargestellte Ionenerzeuger 4.1 bis 4.5 und an diese angeschlossene und in den Sichtkanal 2 mündende Einströmdüsen 5. Der Sichtkanal 2 ist im Wesentlichen im Gegenstrom zur Schwerkraft, also von unten nach oben, von einem Sichtgas 6 durchströmt. Mit den Ionisierungseinrichtungen 3 wird jeweils ein ionisiertes Gas 7 erzeugt und im Wesentlichen im Querstrom Q zum Sichtgas 6 in den Sichtkanal 2 eingeleitet.

Das Sichtgas 6 und das ionisierte Gas 7 sind vorzugsweise Luft und können beispielsweise aus der Raumluft und/oder Umgebungsluft gewonnen werden. Die Ionenerzeuger 4.1 bis 4.5 dienen dann insbesondere der Erzeugung ionisierten Luftsauerstoffs.

Das Sichtgas 6 wird mit Hilfe eines ersten Gebläses 8 in den unteren Bereich des Sichtkanals 2 eingeblasen. Das Sichtgas 6 kann zu diesem Zweck im Kreislauf geführt werden, beispielsweise indem es nach dem Sichtkanal 2 und einem Feinteilabscheider 9 zum Abtrennen einer Feinfraktion P' der Kunststoffpartikel P aus dem Sichtgas 6 zum ersten Gebläse 8 zurückgeführt wird. Ein derartiger Kreislauf ist jedoch nicht zwingend notwendig. Schematisch angedeutet sind ferner ein zweites Gebläse 10, mit dem Luft durch die Ionisierungseinrichtungen 3 geblasen wird, Ventile 11 zum Einstellen der einzelnen Volumenströme durch die lonisierungseinrichtungen 3, sowie Fördereinrichtungen 12 bis 14 zum Zuführen der zu sichtenden Kunststoffpartikel P, zum Abfördern der Feinfraktion P' sowie zum Abfördern einer in bekannter Weise am unteren Ende des Sichtkanals 2 anfallenden Grobfraktion P" der Kunststoffpartikel P.

Die Richtungen der Einströmdüsen 5 für das ionisierte Gas 7 sind vorzugsweise einstellbar, insbesondere unabhängig voneinander. Wie die Figur 1 ferner andeutet, ist der Sichtkanal 2 vorzugsweise zickzackförmig ausgebildet, so dass sich in dem Sichtkanal 2 eine schematisch angedeutete Zickzackströmung Z des Sichtgases 6 ausbildet, die unter mehrfacher Änderung der Hauptströmungsrichtung 6' des Sichtgases 6 aufwärts verläuft.

Zum besseren Verständnis der Funktionsweise kann der Sichtkanal 2 in mehrere, jeweils durch die Richtungswechsel der Hauptströmungsrichtung 6' begrenzte Sichtkanalstufen 2a untergliedert werden. Dies ist in der Fig. 1 gestrichelt für eine der Stufen 2a angedeutet. Diesen sind vorzugsweise, jedoch nicht zwingend, separat ansteuerbare Ionisierungseinrichtungen 3 zugeordnet. Beispielsweise kann jeder Sichtkanalstufe 2a ein eigener Ionenerzeuger 4.1 bis 4.5 und eine Gruppe von Einströmdüsen 5 zugeordnet werden. Ebenso wäre es denkbar, wenigstens zwei Sichtkanalstufen 2a mit einem gemeinsamen Ionenerzeuger zu versorgen. Zwischen diesem und den Einströmdüsen 5 könnte dann für jede der derart versorgten Sichtkanalstufen 2a ein separates Ventil zum Einstellen eines Teilvolumenstroms in die jeweilige Sichtkanalstufe 2a vorgesehen sein (nicht dargestellt). Vorteilhaft ist in jedem Fall eine separate Einstellung der Ionenzufuhr in die einzelnen Sichtkanalstufen 2a, beispielsweise durch Einstellen des jeweils eingeleiteten Volumenstroms und/oder der Ionenkonzentration des in die jeweilige Sichtkanalstufe 2a eingeleiteten ionisierten Gases 7. Die Anzahl der Richtungswechsel der Zickzackströmung Z oder der Anzahl der Stufen 2a des Sichtkanals 2 ist lediglich beispielhaft dargestellt. Die in der Figur 2 schematisch dargestellte zweite Ausführungsform 21 des Schwerkraftsichters unterscheidet sich von der ersten Ausführungsform 1 durch die Führung der Zuluft und der Abluft. Demnach ist bei der zweiten Ausführungsform 21 ein separates Gebläse 22 zum Absaugen des Sichtgases 6 hinter dem Feinteilabscheider 9 vorgesehen. Mit dem ersten Gebläse 8 wird das Sichtgas 6 durch eine Hauptversorgungsleitung 23 in den Sichtkanal 2 eingeblasen. Von dieser zweigen Nebenversorgungsleitungen 24 in Richtung der Ionenerzeuger 4.1 bis 4.5 ab, um auch in diese Luft einzublasen. Es sind vorzugsweise mehrere bezüglich der Sichtgasströmung hintereinander liegende Querströme Q des ionisierten Gases 7 vorgesehen. An den Nebenversorgungsleitungen 24 können die in der Fig. 1 angedeuteten Ventile 11 oder dergleichen zum Einstellen des jeweiligen Volumenstroms vorgesehen sein (in der Fig. 2 nicht dargestellt).

Ein mittlerer Bereich A des Sichtkanals 2 ist in der Figur 2 vergrößert dargestellt. Demnach folgt die Hauptströmungsrichtung 6' des Sichtgases (durchgezogene Pfeile) im Wesentlichen der Form des Sichtkanals 2. Die Hauptströmungsrichtung 7' des einströmenden ionisierten Gases 7 (gestrichelte Pfeile) verläuft jeweils quer zur Hauptströmungsrichtung 6' des Sichtgases 6. Den einzelnen Ionenerzeugern 4.1 bis 4.5 können jeweils mehrere Einströmdüsen 5 zugeordnet sein, von denen der Einfachheit halber in der Figur 2 lediglich zwei Einströmdüsen 5 des vergrößert dargestellten mittleren Ionenerzeugers 4.3 gezeigt sind. Die Einströmdüsen 5 könnten in Anlehnung an die schematische Darstellung der Fig. 1 auch über Verbindungsleitungen an die Ionenerzeuger 4.1 bis 4.2 angeschlossen sein.

Die gezeigten Ausführungsformen 1, 21 sind als Zickzacksichter ausgebildet, die bekanntermaßen eine verbesserte Trennschärfe gegenüber einfachen Steigrohrsichtem mit im Wesentlichen geradliniger vertikaler Sichtgasströmung aufweisen. Die erfindungsgemäße Ionisierung ließe sich jedoch ebenso in einem derartigen Steigrohrsichter vorteilhaft anwenden.

Das ionisierte Gas 7 wird dem Sichtgas 6 vorzugsweise im Sichtkanal 2 beigemengt, könnte jedoch auch, zumindest anteilig, mit dem Sichtgas 6 gemeinsam durch die Hauptversorgungsleitung 23 eingeleitet werden und/oder im unteren Bereich des Sichtkanals 2, unterhalb der untersten Sichtkanalstufe 2a erzeugt werden.

Wie in der Fig. 2 vergrößert dargestellt ist, begünstigt die erfindungsgemäße Ionisierung und die daraus folgende Reduzierung elektrostatischer Ladungen auf den Kunststoffpartikeln P die Trennung der Feinfraktion P' von der Grobfraktion P". Zur Verdeutlichung ist der Größenunterschied zwischen den Fraktionen in der Figur 2 übertrieben dargestellt. Mit Hilfe der Ionisierung lassen sich Feinfraktionen P' und Grobfraktionen P" desselben Materials, insbesondere aus PET, die sich nur vergleichsweise geringfügig bezüglich ihrer Größe und/oder Formgebung unterscheiden, voneinander trennen. Insbesondere können PET-Flakes unterschiedlicher Größe mit ausreichender Trennschärfe in eine Feinfraktion, beispielsweise Anteile aus beim Streckblasen verstreckten Flaschenwänden, und eine Grobfraktion, beispielsweise Anteile aus beim Streckblasen unverstreckten Flaschenmündungen, klassiert werden.

Die Hauptströmungsrichtung 7' des ionisierten Gases 7 muss nicht, wie in der Fig. 2 schematisch angedeutet ist, exakt senkrecht auf die Hauptströmungsrichtung 6' des Sichtgases 6 ausgerichtet sein. Beispielsweise kann die Richtung der Düsen 5 und damit die Hauptströmungsrichtung 7' des jeweils einströmenden ionisierten Gases 7 verstellbar sein. Damit lassen sich in unterschiedlichen Bereichen des Sichtkanals 2, insbesondere in den einzelnen Sichtkanalstufen 2a, gezielt optimierte Strömungsverhältnisse für das ionisierte Gas 7 und das Sichtgas 6 herstellen.

Die Figur 3 verdeutlicht die Leitungsführung in der zweiten Ausführungsform 21 mit der Hauptversorgungsleitung 23 für das Sichtgas 6 und die Nebenversorgungsleitungen 24 für die lonenerzeuger 4.1 bis 4.5 mit Zuluft.

Mit dem Schwerkraftsichter kann wie folgt gearbeitet werden:
Ein zu sichtender Strom aus Kunststoffpartikeln P wird beispielsweise mit Hilfe der oberen Fördereinrichtung 12 in den Sichtkanal 2 derart eingebracht, dass die zu sichtenden Kunststoffpartikel P vorzugsweise frei in den Sichtkanal 2 fallen können und/oder von dem nach oben strömenden Sichtgas 6 frei angeströmt werden. An den Kunststoffpartikeln der Grobfraktion P" aufgrund elektrostatischer Anziehung anhaftende Kunststoffpartikel der Feinfraktion P' können sich durch das erfindungsgemäße Ionisieren wenigstens eines Anteils des durch den Sichtkanal 2 strömenden Gases von den Partikeln der Grobfraktion P" ablösen. Folglich werden die Partikel der Feinfraktion P' im Sichtkanal 2 von dem Sichtgas 6 erfasst und nach oben in Richtung des Filters 9 aus dem Sichtkanal 2 ausgetragen. Kunststoffpartikel der Schwerfraktion P" fallen entgegen des nachströmenden Sichtgases 6 nach unten aus dem Sichtkanal 2. Dort können sie beispielsweise mit der unteren Fördereinrichtung 14 abgefördert werden.
Durch das Anströmen der Kunststoffpartikel P mit ionisiertem Gas 7, insbesondere quer zur Hauptströmungsrichtung 6' des Sichtgases 6, verringert sich die elektrostatische Aufladung derart, dass Kunststoffpartikel P aus demselben Material, insbesondere PET-Flakes, gezielt und mit vorgegebenen Trennschärfe in eine Grobfraktion und eine Feinfraktion klassiert werden können.
Die Hauptströmungsrichtungen 7' an den einzelnen Düsen 5 werden hierbei ebenso wie die jeweiligen Volumenströme des ionisierten Gases 7 selektiv an die gewünschten Strömungsverhältnisse und die vorliegende Größenverteilung der eingefüllten Kunststoffpartikel P angepasst.
Die beschriebenen Ausführungsformen lassen sich hierbei kombinieren, beispielsweise unterschiedliche Ionenerzeuger, Zuluftleitungen und/oder Ventile. Ebenso kann bereits vorionisiertes Sichtgas in den unteren Eingangsbereich des Sichtkanals eingeleitet werden und/oder separat ionisiertes Gas zugemischt werden.

## Patentansprüche

1. Verfahren zur Schwerkraftsichtung von Kunststoffpartikeln (P), bei dem ein Sichtgas (6) im Gegenstrom gegen die zu sichtenden Kunststoffpartikel aufwärts geführt wird,
wobei das Sichtgas zumindest teilweise ionisiert ist und die Kunststoffpartikel durch die Windsichtung in eine Feinfraktion und eine Grobfraktion getrennt werden,
**dadurch gekennzeichnet, dass**
die Kunststoffpartikel Kunststoff-Flakes sind.

2. Verfahren nach Anspruch 1, wobei dem Sichtgas (6) ein ionisiertes Gas (7) beigemengt wird, insbesondere im Querstrom bezüglich der Hauptströmungsrichtung (6') des Sichtgases.

3. Verfahren nach Anspruch 2, wobei das ionisierte Gas (7) in wenigstens zwei bezüglich des Volumenstroms und/oder seiner Hauptströmungsrichtung (7') getrennt einstellbaren Querströmen (Q) beigemengt wird.

4. Verfahren nach Anspruch 3, wobei die Querströme (Q) bezüglich der Hauptströmungsrichtung (6') des Sichtgases (6) hintereinander eingeleitet werden.

5. Verfahren nach wenigstens einem der vorigen Ansprüche, wobei das Sichtgas (6) in einer Zickzackströmung (Z) geführt wird.

6. Verfahren nach Anspruch 5, wobei das ionisierte Gas (7) dem Sichtgas (6) an wenigstens zwei Stufen (2a) der Zickzackströmung (Z) beigemengt wird.

7. Verfahren nach wenigstens einem der vorigen Ansprüche, wobei die zu sichtenden Kunststoffpartikel (P) eine Fraktion aus einem mittels aktiver elektrostatischer Partikelaufladung trennenden Materialtrennverfahren sind.

8. Verfahren nach wenigstens einem der vorigen Ansprüche, wobei die Kunststoffpartikel zu wenigstens 50 Gew.% aus R-PET-Flakes bestehen.

## Claims

1. Method for gravity separation of plastics particles (P), in which a separation gas (6) is guided upwardly in the counter stream against the plastic particles to be separated, wherein the separation gas is at least partially ionized and the plastic particles are separated by air separation into a fine fraction and a coarse fraction,
**characterized in that**
the plastic particles are plastic flakes.

2. Method according to claim 1, wherein ionized gas (7) is added to the separation gas (6), in particular in the transverse stream relative to the main direction of flow (6') of the separation gas.

3. Method according to claim 2, wherein the ionized gas (7) is added in at least two transverse streams (Q) separately adjustable in terms of the flow rate and/or its main direction of flow (7').

4. Method according to claim 3, wherein the transverse streams (Q) are introduced successively relative to the main direction of flow (6') of the separation gas (6).

5. Method according to at least one of the preceding claims, wherein the separation gas (6) is directed in a zigzag flow (Z).

6. Method according to claim 5, wherein the ionized gas (7) is added to the separation gas (6) at at least two stages (2a) of the zigzag flow (Z).

7. Method according to at least one of the preceding claims, wherein the plastic particles (P) to be separated are a fraction from a material separation method having been separated using active electrostatic particle charging.

8. Method according to at least one of the preceding claims, wherein the plastics particles are composed of at least 50% by weight R-PET flakes.

## Revendications

1. Procédé pour la séparation par tri gravitationnel de particules de matière plastique (P), d'après lequel un gaz de séparation (6) est mené à contre-courant vers le haut à l'encontre des particules de matière plastique à séparer, le gaz de séparation étant au moins partiellement ionisé, et les particules de matière plastique étant séparées par criblage ou séparation pneumatique en une fraction fine et une fraction grossière,
**caractérisé en ce que**
les particules de matière plastique sont des flocons de matière plastique.

2. Procédé selon la revendication 1, d'après lequel on additionne au gaz de séparation (6) un gaz ionisé (7), notamment selon flux transversal par rapport à la direction principale d'écoulement (6') du gaz de séparation.

3. Procédé selon la revendication 2, d'après lequel le gaz ionisé (7) est additionné en au moins deux flux transversaux (Q) réglables séparément quant au débit volumique et/ou quant à leur direction principale d'écoulement (7').

4. Procédé selon la revendication 3, d'après lequel les flux transversaux (Q) sont introduits l'un derrière l'autre en se référant à la direction d'écoulement principale (6') du gaz de séparation (6).

5. Procédé selon l'une au moins des revendications précédentes, d'après lequel le gaz de séparation (6) est mené et guidé selon un écoulement ou flux en zigzag (Z).

6. Procédé selon la revendication 5, d'après lequel le gaz ionisé (7) est additionné au gaz de séparation (6) au niveau d'au moins deux étages (2a) de l'écoulement en zigzag (Z).

7. Procédé selon l'une au moins des revendications précédentes, d'après lequel les particules de matière plastique (P) à séparer par tri sont une fraction en provenance d'un procédé de séparation de matière assurant la séparation au moyen d'une charge électrostatique active des particules.

8. Procédé selon l'une au moins des revendications précédentes, d'après lequel les particules de matière plastique sont constituées pour au moins 50% en poids de flocons de R-PET (PET de recyclage).
